# EUROPEAN PATENT SPECIFICATION

(11) **EP 3 073 607 B1**
(45) Date of publication and mention of the grant of the patent: **15.01.2020**
(21) Application number: 14860029.9
(22) Date of filing: 29.10.2014
(51) Int. Cl.: H01F 38/18

(54) **CONTACTLESS POWER SWIVEL**
SCHWENKELEMENT MIT KONTAKTFREIER STROMVERSORGUNG
JOINT TOURNANT ÉLECTRIQUE SANS CONTACT

(30) Priority: 08.11.2013 KR 20130135855
(43) Date of publication of application: 28.09.2016
(73) Proprietor: Samsung Heavy Ind. Co., Ltd., Seoul 135-280 (KR)
(72) Inventor: JO, Teak Hyun, Geoje-si, Gyeongsangnam-do 656-710 (KR); KIM, Kyeong-Ki, Geoje-si, Gyeongsangnam-do 656-710 (KR); KIM, Eun Kyung, Geoje-si, Gyeongsangnam-do 656-710 (KR)
(74) Representative: Viering, Jentschura & Partner mbB Patent- und Rechtsanwälte
(86) International application number: PCT/KR2014/010258
(87) International publication number: WO 2015/068982

(56) References cited:
- EP-A2- 2 353 213
- JP-A- 2011 229 244
- KR-A- 20110 121 624
- KR-A- 20130 017 355
- US-A- 3 317 874
- US-A1- 2011 050 377
- US-A1- 2012 133 468
- US-A1- 2012 133 468

## Description

### Technical field

The invention relates to a contactless power swivel.

### BACKGROUND

Generally, a FPSO (Floating Production Storage and Offloading) or the like for drilling gas or crude oil in a seabed includes a turret for a drilling operation.

The turret is installed in a vertical opening or a moon pool provided at one end, typically a bow, of a vessel. The turret is connected by a chain or the like to a subsea well platform in the seabed, thereby allowing the vessel to moor.

Further, the turret is installed such that the vessel can rotate about the turret. For example, the turret is fixed to the subsea well platform in the seabed and a bearing is provided between the turret and the vertical opening (moon pool) of the vessel. Accordingly, the vessel can rotate about the turret in response to wind, waves and currents. As a result, gas or crude oil can be stably transferred to the vessel through pipes or the like in the turret regardless of the effect of wind, waves and currents during the drilling operation.

The turret may be provided with a swivel stack having a plurality of swivels. The swivels are disposed at multiple levels in a vertical direction, and the drilled gas or crude oil can be transferred to each part of the vessel through the swivel stack. Each of the swivels is connected at its inner portion to the turret and maintained in a fixed state. Each of the swivels is connected at its outer portion to a hull. Therefore, each of the swivels can rotate with the vessel when the vessel rotates about the turret.

Generally, a torque arm is connected to the outer portion of the swivel. Accordingly, when the outer portion of the swivel rotates with the vessel, a load is not applied to a pipe connecting portion. As a result, the outer portion of the swivel can rotate readily.

Various devices that require power may be installed at the turret. For example, a winch, an illumination device, a heating device, various sensors and the like may be installed at the turret. These devices need to be supplied with power.

Currently, a slip-ring type power transmission is widely used. To be specific, a specific swivel of the swivel stack is used as a slip-ring (or a slip-ring is installed at a specific swivel), and an inner stator of the slip-ring is connected to the turret and an outer rotor of the slip-ring is connected to the hull. When the vessel rotates about the turret, the inner stator of the slip-ring is fixed, whereas the outer rotor of the slip-ring can rotate about the inner stator. Accordingly, the power applied to the outer rotor can be transferred to the inner stator and then supplied to various devices of the turret.

However, the slip-ring type power transmission is carried out by physical contact between the inner stator and the outer rotor. Therefore, when the vessel rotates about the turret, a wear problem is necessarily caused by friction. To that end, a regular maintenance operation is additionally required. Besides, spark may be generated when a contact point between the rotor and the stator of the slip-ring is released by instantaneous movement of the vessel. Spark may lead to fire because gas, oil vapor, or the like may exist in the vicinity thereof.

US 2011/0050377 A1 discloses a system for high power transmission on an installation comprising a first part and a second part rotating relative to each other characterized in that the system further comprising a rotary three-phase transformer having primary and secondary windings, the first part being provided with one of said primary or secondary windings, the second part being provided with the remaining winding of said primary or secondary windings, said primary and secondary windings are arranged to face each other, and an air gap is provided between the primary and secondary windings and their corresponding parts of the transformer cores.

### SUMMARY

Embodiments of the present disclosure provide a contactless power swivel capable of providing power to a turret in a contactless manner.

Further, the embodiments of the present disclosure provide a contactless power swivel that reduces wear caused by friction and the possibility of spark.

Moreover, the embodiments of the present disclosure provide a contactless power swivel that allows easy maintenance.

### TECHNICAL SOLUTION

The present disclosure provides a contactless power swivel according to claim 1. Further embodiments are described in the dependent claims.
the contactless power swivel and connected to the floating structure; and a second cover configured to cover the second coil unit, wherein the first case and the first cover rotate with the floating structure when the floating structure rotates.

Further, the embodiments of the present disclosure provides the contactless power swivel, wherein the first case supports a lower end portion and a side portion of the first coil unit.

Further, the embodiments of the present disclosure provides the contactless power swivel, comprising a plurality of bearing portions provided between the first case and the second case and between the first cover and the second cover.

Further, the embodiments of the present disclosure provides the contactless power swivel, wherein the first case has a hollow portion where the first coil unit is accommodated, an open top, and a bottom surface having an opening at a central portion, and the second case is provided at the opening formed at the bottom surface of the first case and supports a lower end portion of the second coil unit.

Further, the embodiments of the present disclosure provides the contactless power swivel, wherein the first cover is a disc-shaped member having an opening at a central portion and has a shape corresponding to a shape of the bottom surface of the first case, and the second cover is a disc-shaped member provided at the opening of the first cover and has a shape corresponding to a shape of the second case.

Further, the embodiments of the present disclosure provides the contactless power swivel, wherein the first coil unit includes a vertical member, a first coil wound around the vertical member, and an upper end portion and a lower end portion extending from both ends of the vertical member in a direction perpendicular to the vertical member, and the second coil unit includes a cylindrical member, a second coil wound around the cylindrical member, and an upper disc-shaped member and a lower disc-shaped member provided at both ends of the cylindrical member, a diameter of the upper disc-shaped member and a diameter of the lower disc-shaped member being greater than a cross sectional diameter of the cylindrical member.

Further, the embodiments of the present disclosure provides the contactless power swivel, wherein a plurality of through holes is formed at the first case to allow the first coil wound around the first coil unit to be inserted into and taken out.

Further, the embodiments of the present disclosure provides the contactless power swivel, wherein a plurality of through holes is formed at the second case to allow the second coil wound around the second coil unit to be inserted into and taken out.

Further, the embodiments of the present disclosure provides the contactless power swivel, comprising a plurality of sealing members, provided at the respectively through holes, configured to seal the contactless power swivel.

Further, the embodiments of the present disclosure provides the contactless power swivel, wherein the first case and the first coil unit are spaced apart from each other by a predetermined distance, and the first coil unit is fixed to the first case while being connected to the first case via an insulator.

Further, the embodiments of the present disclosure provides the contactless power swivel, wherein an inner space defined by the first case, the second case, the bearing portions, the first cover, and the second cover is filled with insulating oil.

Further, the embodiments of the present disclosure provides the contactless power swivel, wherein two first coil units are spaced apart from each other at a right angle about the second coil unit, or three first coil units are spaced apart from each other at an angle of 120° about the second coil unit.

### ADVANTAGEOUS EFFECTS

According to the embodiments of the present disclosure, it is possible to provide a contactless power swivel capable of providing power to a turret in a contactless manner.

It is also possible to provide a contactless power swivel that reduces wear caused by friction and the possibility of spark.

It is also possible to provide a contactless power swivel that allows easy maintenance.

### BRIEF DESCRIPTION OF THE DRAWINGS

Fig. 1 schematically shows a general swivel stack.
Fig. 2 is a view showing inside and outside of a contactless power swivel according to an embodiment which is obtained by cutting out a central portion of the contactless power swivel.
Fig. 3 is a top view of a contactless power swivel according to another embodiment.
Fig. 4 is a top view of a contactless power swivel according to still another embodiment.

### DETAILED DESCRIPTION

The advantages and features of the present disclosure and the ways to achieve them will become apparent from the following description of exemplary embodiments given in conjunction with the accompanying drawings. The exemplary embodiments will be described in detail so that inventive concept may be readily implemented by those skilled in the art.

However, it is to be noted that the exemplary embodiments are not intended to be anyway limiting and various modifications may be made without departing from the technical concept of the present disclosure. The scope of the inventive concept will be defined by the following claims rather than by the detailed description of the exemplary embodiments.

Hereinafter, the case in which the contactless power swivel according to the embodiment is installed at a vessel will be described. However, the present disclosure is not limited thereto. The contactless power swivel according to the embodiment may also be applied to various floating structures such as an offshore plant and the like, other than the vessel.

Hereinafter, the case in which the contactless power swivel according to the embodiment is installed at an uppermost end portion of the turret will be described. However, the present disclosure is not limited thereto. The contactless power swivel according to the embodiment may also be installed at a location other than the turret, or at an intermediate portion, not the uppermost end portion, of the swivel stack.

The turret and the operation of the vessel which is mainly related to the turret will be described before specific description of the present disclosure.

The turret may be provided at a floating structure for drilling gas or crude oil in a seabed, e.g., a drill ship, a FPSO (Floating Production Storage and Offloading) or the like. The turret may be classified into an internal turret and an external turret depending on the installation position of the turret at the hull.

When the vessel is moved by wind, waves or currents during the transfer of gas or crude oil, the vessel can rotate about the turret. Therefore, the gas or the crude oil can be stably transferred to the vessel through pipes or the like in the turret regardless of the movement of the vessel. For example, various pipes such as a riser and the like are not twisted by the movement of the vessel.

The internal turret may be installed at a vertical opening (moon pool) formed in the hull to penetrate therethrough. A plurality of bearings may be provided at the vertical opening so that the hull can rotate about the turret. In other words, one side and the other side of each bearing are respectively brought into contact with the hull and the turret and move in rolling motion. Accordingly, the relative rotation of the hull and the turret can be smoothly performed.

The turret may include a lower turret, an upper turret, a piping deck, a mezzanine deck, a gantry crane or the like, which are provided in that order from bottom to top. The gantry crane is an equipment for offloading drilled gas or crude oil. A swivel stack and utility pipe connected thereto may be installed in a supporting structure of the gantry crane. The utility pipe may be supported by the piping deck and the mezzanine deck. One side of the utility pipe is connected to each part of the vessel so that the drilled crude oil or gas can be transferred to each part of the vessel. The other side of the utility pipe may be connected to a riser installed in the turret. The riser is connected to the subsea well platform so that gas or crude oil drilled from the well can be transferred to the utility pipe.

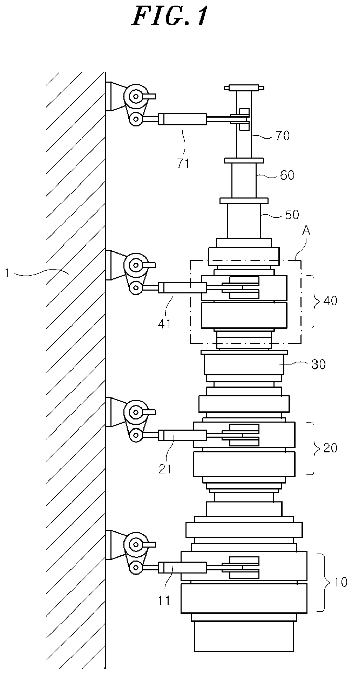

Fig. 1 schematically shows a general swivel stack.

As illustrated, the swivel stack may include a plurality of swivels arranged at multiple levels in a vertical direction. A swivel disposed at a lowermost end may be a production swivel 10. The production swivel 10 can receive crude oil or gas from the riser installed at the turret and transfer the crude oil or the gas to the hull through the utility pipe. Various swivels such as a water injection swivel 20, a fire water swivel 30, a gas lift and injection swivel 40, utility swivels 50 and 60, and the like may be provided above the production swivel 10. The swivels of the swivel stack can contribute to stable transfer of the crude oil or the gas drilled from the seabed to the hull by performing the respective functions thereof.

In a conventional gas, as shown in Fig. 1, power is supplied to the turret including the swivel stack via a slip-ring 70. The slip-ring 70 is generally provided at an upper end portion of the swivel stack. The slip-ring 70 is connected to a torque arm 71 connected to a hull 1, so that an outer rotor of the slip-ring 70 can rotate with the vessel. An inner stator of the slip-ring 70 is connected to the turret and thus does not rotate with the vessel when the vessel rotates.

As described above, in the slip-ring type power supply structure, the rotor and the stator of the slip-ring 70 are brought into contact with each other. Therefore, when the vessel rotates about the turret, a wear problem caused by friction or the like may occur. Further, if a contact point between the rotor and the stator is released by instantaneous movement of the vessel, spark may be generated and lead to fire.

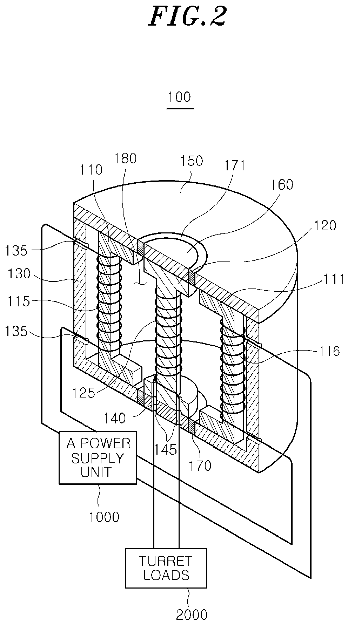

Fig. 2 is a view showing inside and outside of a contactless power swivel 100 according to an embodiment which is obtained by cutting out a central portion of the contactless power swivel 100.

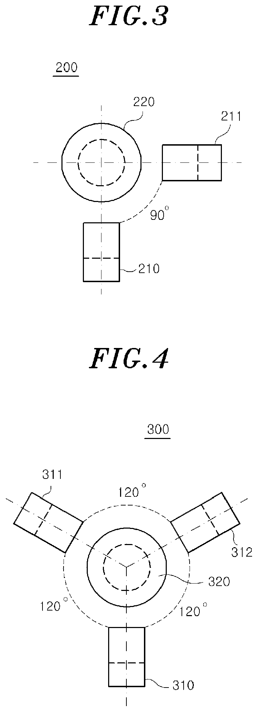

As shown in Fig. 2, the contactless power swivel 100 of the present embodiment may include two first coils units 110 and 111 provided at both sides of a second coil unit 120 with the second coil unit 120 interposed therebetween. However, the present disclosure is not limited thereto. A single first coil unit may be provided. Or, three first coil units may be provided as in an embodiment shown in Fig. 4.

The first coil unit 110 is provided at one side of the second coil unit 120 and may be spaced apart from the second coil unit 120 by a predetermined distance. The other first coil unit 111 is provided at the other side of the second coil unit and may be spaced apart from the second coil unit 120 by a predetermined distance.

Each of the first coil units 110 and 111 may have a U-shaped cross section when viewed as shown in Fig. 2. First coils 115 and 116 may be wound around central vertical members of the first coil units 110 and 111, respectively. The second coil unit 120 may include an upper disc-shaped member, a lower disc-shaped member, and a central cylindrical member. The second coil 125 may be wound around the cylindrical member.

The first coils 115 and 116 wound around the first coil units 110 and 111 and the second coil unit 120 can be inserted into and taken out of the contactless power swivel 100 through through holes 135 formed at the first case 130 and through holes 145 formed at the second case 140, respectively. The through holes 135 and 145 will be described in detail later.

The first case 130 may have an L-shaped cross section as can be seen from Fig. 2. The first case 130 has a hollow inner space with an open top which is formed by rotating the L-shaped cross section about a central portion of the contactless power swivel 100 by 360°. An opening may be formed at a central portion of the bottom surface of the first case 130. The second case 140 may be provided at the opening and support the second coil unit 120 as will be described later.

In the present embodiment, the first case 130 having the above-described shape can support a lower end portion and a side portion of the first coil unit 110. For example, as shown in Fig. 2, the first case 130 can support a lower horizontal member of the U-shaped first coil unit 110 from the bottom and support a central vertical portion of the U-shaped first coil unit 110 from the outer side to the inner side of the contactless power swivel 100.

The central vertical member of the first coil unit 110 is wound by the first coil 115 and thus is not in direct contact with the first case 130. In that case, the first coil unit 110 can be stably supported by the first case 130 by connecting one ends of a plurality of insulators (not shown) to a plurality of portions of the first coil unit 110 and the other ends of the insulators to an inner surface of the first case 130. Since the first coil unit 110 is fixed to the corresponding position, the first coil unit 110 can be prevented from moving with respect to the first case 130 during the rotation of the vessel.

In the present embodiment, the first case 130 is in direct contact with the lower end portion of the first coil unit 110 and supports the first coil unit 110. However, an insulator may be provided between the lower end portion of the first coil unit 110 and the first case 130.

The second case 140 can support the second coil unit 120. In the present embodiment, the second coil unit 120 is provided at the central portion of the contactless power swivel 100, so that the second case 140 can become the central portion of the bottom surface of the contactless power swivel 100.

In the present embodiment, the second case 140 is formed in a disc shape and can support the lower end portion of the second coil unit 120 from the bottom. In addition, as in the case of the first coil unit 110 and the first case 130, insulators may be provided between the second coil unit 120 and the second case 140.

Other swivels of the swivel stack may be positioned under the first case 130 and the second case 140. An upper turret, a lower turret, or the like may be positioned under those other swivels. As will be described later, the first case 130 is connected to the hull and thus can rotate together with the vessel when the vessel rotates about the turret. The second case 140 is connected to the turret and thus can be prevented from rotating when the vessel rotates about the turret.

The first cover 150 may be a disc-shaped member having an opening at a central portion thereof. The shape of the first cover 150 may correspond to the shape of the bottom surface of the first case 130. The first cover 150 can cover the upper end portion of the first coil unit 110 after the first coil unit 110 is installed inside the contactless power swivel 100. The first cover 150 and the first coil unit 110 may be spaced apart from each other by providing insulator between the first cover 150 and the upper end portion of the first coil unit 110.

The second cover 160 may be a disc-shaped member. The shape of the second cover 160 may correspond to the shape of the second case 140. The second cover 160 can cover the upper end portion of the second coil unit 120 after the second coil unit 120 is installed inside the contactless power swivel 100. The second cover 160 and the second coil unit 120 may be spaced apart from each other by providing insulators between the second cover 160 and the upper end portion of the second coil unit 120.

The contactless power swivel 100 may be located at an upper portion (or an uppermost portion) of the swivel stack. However, the present disclosure is not limited thereto, and other swivels may be located above the contactless power swivel 100. Therefore, the top surfaces of the first cover 150 and the second cover 160 may be connected to other swivels. As will be described later, the first cover 150 is connected to the hull and thus can rotate with the vessel when the vessel rotates about the turret. The second cover 160 is connected to the turret (via the second coil unit 120) and thus can be prevented from rotating when the vessel rotates about the turret.

Referring to Fig. 2, the end portion of the bottom surface of the first case 130 is not in direct contact with the end portion of the second case 140 and an inner peripheral surface of the first cover 150 is not in direct contact with an outer peripheral surface of the second cover 160. As described above, the first case 130 and the first cover 150 are connected to the hull and thus can rotate with the vessel, whereas the second case 140 and the second cover 160 do not rotate with the vessel. Therefore, the first case 130 and the second case 140 can relatively rotate with respect to the first cover 150 and the second cover 160. In order to support the relative rotation therebetween, bearing portions 170 and 172 may be provided between the end portion of the bottom surface of the first case 130 and the end portion of the second case 140 and between the inner peripheral surface of the first cover 150 and the outer peripheral surface of the second cover 160, respectively. The bearing portions 170 and 171 can support the relative position between the first case 140 and the second case 150 and the relative rotation between the first cover 150 and the second cover 160, respectively.

Hereinafter, an operation of the contactless power swivel 100 of the present embodiment will be described.

A power supply unit 1000 provided at the vessel may apply a current to the first coil unit 110, specifically to the first coil 115 of the first coil unit 110. The current flowing through the first coil 115 wound around the first coil unit 110 may generate a magnetic field at the first coil unit 110. Further, a magnetic field of a direction opposite to that of the magnetic field generated at the first coil unit 110 may be induced to the second coil unit 120 adjacent to the first coil unit 110. The current may be induced and flow through the second coil 125 of the second coil unit 120 by the induced magnetic field. The current induced to the second coil 125 may be supplied to the turret and used for driving various turret loads 2000 (e.g., a winch, an illumination device, a heating device, a sensor and the like) installed at the turret.

When the vessel rotates about the turret, the first coil unit 110 connected to the hull rotates with the vessel, whereas the second coil unit 120 connected to the turret is fixed without rotating with the vessel. In other words, according to the embodiments of the present disclosure, the relative rotation between the first coil unit 110 and the second coil unit 120 can be performed, and the current applied to the first coil unit 110 can be induced to the second coil unit 120 during such relative rotation. Therefore, unlike the conventional slip-ring, the wear problem caused by friction between the rotor and the stator does not occur during the rotation of the vessel. Accordingly, an additional maintenance operation for the rotor and the stator is not required. Further, since the rotor and the stator are not brought into contact with each other, spark caused when the contact between the rotor and the stator is instantaneously released hardly occurs.

An inner space of the contactless power swivel 100 which is defined by the first case 130, the second case 140, the bearing portions 170 and 171, the first cover 150 and the second cover 160 may be filled with insulating oil. The insulating oil makes it possible to maintain a state in which the first coil unit 110 and the second coil unit 120 are spaced apart from each other by a predetermined distance without being in contact with each other.

As described above, a plurality of through holes 135 and 145 may be formed at each of the first case 130 and the second case 140. The through holes 135 and 145 can provide paths that allow the first coil 115 and the second coil 125 to be inserted into and taken out of the contactless power swivel 100. In the present embodiment, two through holes 135 are formed at the first case 130 and two through holes 145 are formed at the second case 140 so that both ends of the first coil 115 and both ends of the second coil 125 can be individually inserted into and taken out.

Further, additional sealing members may be provided at the through holes 135 and 145 to prevent materials other than the first coil 115 or the second coil 125 from entering therethrough. For example, various inflammable materials, moisture and the like are prevented from entering therethrough, so that operation stability can be improved. The sealing members also prevent leakage of the insulating oil in the case where the inner space of the contactless power swivel 100 is filled with the insulating oil.

Figs. 3 and 4 are top views of contactless power swivels 200 and 300 according to other embodiments. The embodiments shown in Figs. 3 and 4 are different from the embodiment shown in Fig. 1 in the number and/or the arrangement of the first coil unis. In Figs. 3 and 4, the bearing portions provided between the first cover and the second cover and between the first cover and the second cover are not illustrated for clear description.

The contactless power swivel 200 according to the embodiment shown in Fig. 3 may include two first coil units 210 and 211 as in the case of the contactless power swivel 100 according to the embodiment shown in Fig. 2. In the contactless power swivel 100 according to the embodiment shown in Fig. 2, two first coil units 110 and 111 are spaced apart from each other at an angle of 180°C with the second coil unit 120 interposed therebetween. Whereas, in the contactless power swivel 200 according to the embodiment shown in Fig. 3, two first coil units 210 and 211 may be spaced apart from each other at a right angle about the second coil unit 220. Accordingly, interference between magnetic fields generated by the currents induced to the first coil units 210 and 211 is reduced. As a result, a large amount of current can be induced to the second coil unit 220, which makes it possible to increase the efficiency of power supply to the turret.

The contactless power swivel 300 according to the embodiment shown in Fig. 4 has the similar purpose as that of the contactless power swivel 200 shown in Fig. 3. The contactless power swivel 300 of the present embodiment may include three first coil units 310, 311 and 312. The three first coil units 310 to 312 may be spaced apart from each other at an angle of 120° about the second coil unit 320. Accordingly, the interference between the magnetic fields generated by the currents applied to the respective first coil units 310 to 312 is reduced. As a result, the power can be supplied to the turret with high efficiency.

Although exemplary embodiments of the present disclosure are described above with reference to the accompanying drawings, those skilled in the art will understand that the present disclosure may be implemented in various ways without changing the necessary features or the spirit of the present disclosure. Therefore, it should be understood that the exemplary embodiments described above are not limiting, but only an example in all respects. The scope of the present disclosure is expressed by claims below, not the detailed description, and it should be construed that all changes and modifications achieved from the meanings and scope of claims and equivalent concepts are included in the scope of the present disclosure.

## Claims

1. A contactless power swivel comprising,
a first coil unit (110,111,210,211,310,311,312), connected to a floating structure, rotatable with the floating structure, to which a current is configured to be applied from a power supply unit provided at the floating structure;
a second coil unit (120,220,320), connected to a turret rotating relative to the floating structure, spaced apart from the first coil unit, to which a current is configured to be induced by a magnetic field formed by the first coil unit; a first case (130), which has a hollow inner space with an open top, which case is formed by rotating an L-shaped cross-section by 360° about a central portion, configured to support the first coil unit, connected to the floating structure and having an opening at a central portion of a bottom surface of the cylindrical part (130);
a second case (140), having the shape of a disc, configured to support the second coil unit, provided at the opening of the cylindrical part (130) and connected to the turret; a first cover part (150), configured to cover the first coil unit and connected to the floating structure; and
a second cover part (160), configured to cover the second coil unit, wherein the current induced to the second coil unit is supplied to the turret,
**characterized in that** a plurality of through holes (135) is formed at said first case (130) to allow the respective both ends of the first coil (115,116) wound around the first coil unit to be inserted into and taken out from the contactless power swivel (100), a plurality of through holes (145) is formed at the second case (140) to allow the second coil wound around the second coil unit to be inserted into and taken out from the contactless power swivel (100), an inner space defined by said first case (130), said second case (140), the first cover part (150), and the second cover part (160) is filled with insulating oil, and
the contactless power swivel further comprises a plurality of sealing members, provided at the respective through holes formed at the first case (130) and the second case (140), configured to seal the inner space.

2. The contactless power swivel of claim 1, wherein said first case (130) and the first cover part (150) rotate with the floating structure when the floating structure rotates.

3. The contactless power swivel of claim 2, wherein the first case (130) supports a lower end portion and a side portion of the first coil unit (110).

4. The contactless power swivel of claim 2, further comprising a plurality of bearing portions provided between the first case (130) and the second case (140) and between the first cover part (150) and the second cover part (160) .

5. The contactless power swivel of claim 2, wherein the first case (130) has a hollow portion where the first coil unit (110) is accommodated, an open top, and a bottom surface having an opening at a central portion, and
the second case (140) is provided at the opening formed at the bottom surface of the first case (130) and supports a lower end portion of the second coil unit (120) .

6. The contactless power swivel of claim 5, wherein the first cover part (150) is a disc-shaped member having an opening at a central portion and has a shape corresponding to a shape of the bottom surface of the first case (130), and
the second cover part (160) is a disc-shaped member provided at the opening of the first cover part (150) and has a shape corresponding to a shape of the second case (140).

7. The contactless power swivel of claim 1, wherein the first coil unit (110) includes a vertical member, a first coil wound around the vertical member, and an upper end portion and a lower end portion extending from both ends of the vertical member in a direction perpendicular to the vertical member, and
the second coil unit (120) includes a cylindrical member, a second coil (125) wound around the cylindrical member, and an upper disc-shaped member and a lower disc-shaped member provided at both ends of the cylindrical member, a diameter of the upper disc-shaped member and a diameter of the lower disc-shaped member being greater than a cross sectional diameter of the cylindrical member.

8. The contactless power swivel of claim 2, wherein said first case (130) and the first coil unit (110) are spaced apart from each other by a predetermined distance, and the first coil unit (110,111) is fixed to said first case (130) via an insulator.

9. The contactless power swivel of claim 1, wherein two first coil units (110,111,210,211) are spaced apart from each other at a right angle about the second coil unit (120,220), or three first coil units (310,311,312) are spaced apart from each other at an angle of 120° about the second coil unit (320).

## Patentansprüche

1. Kontaktfreie-Stromversorgung-Schwenkelement, aufweisend:
eine erste Spuleneinheit (110, 111, 210, 211, 310, 311, 312), die mit einer schwimmenden Struktur verbunden ist, die mit der schwimmenden Struktur rotierbar ist, und die konfiguriert ist, dass ein Strom von einer Stromversorgungseinheit daran anlegbar ist, die an der schwimmenden Struktur bereitgestellt ist,
eine zweite Spuleneinheit (120, 220, 320), die mit einem Turm verbunden ist, der relativ zu der schwimmenden Struktur rotiert, und die von der ersten Spuleneinheit im Abstand ist und die konfiguriert ist, dass ein Strom daran induziert wird mittels eines Magnetfelds, das mittels der ersten Spuleneinheit gebildet ist,
ein erstes Gehäuse (130), welches einen hohlen inneren Raum mit einem offenen oberen Ende hat, welches Gehäuse gebildet ist mittels Rotierens eines L-förmigen Querschnitts um 360° um einen zentralen Abschnitt herum, und das konfiguriert ist, um die erste Spuleneinheit zu stützen, und das mit der schwimmenden Struktur verbunden ist und eine Öffnung an einem zentralen Abschnitt einer Bodenfläche des zylindrischen Teils (130) hat,
ein zweites Gehäuse (140), das die Form einer Scheibe hat, und das konfiguriert ist, um die zweite Spuleneinheit zu stützen, und das an der Öffnung des zylindrischen Teils (130) bereitgestellt ist und mit dem Turm verbunden ist;
ein erstes Abdeckteil (150), das konfiguriert ist, um die erste Spuleneinheit abzudecken und mit der schwimmenden Struktur verbunden ist, und
ein zweites Abdeckteil (160), das konfiguriert ist, um die zweite Spuleneinheit abzudecken,
wobei der Strom, der an der zweiten Spuleneinheit induziert ist, dem Turm zugeführt wird,
**dadurch gekennzeichnet, dass**
eine Mehrzahl von Durchgangslöchern (135) an dem besagten ersten Gehäuse (130) gebildet ist, um den jeweiligen beiden Enden der ersten Spule (115, 116), die um die erste Spuleneinheit gewickelt ist, zu ermöglichen, in das Kontaktfreie-Stromversorgung-Schwenkelement (100) eingeführt und herausgeführt zu sein,
eine Mehrzahl von Durchgangslöchern (145) an dem zweiten Gehäuse (140) gebildet ist, um der zweiten Spule, die um die zweite Spuleneinheit gewickelt ist, zu ermöglichen, in das Kontaktfreie-Stromversorgung-Schwenkelement (100) eingeführt und herausgeführt zu sein,
ein innerer Raum, der definiert ist mittels des besagten ersten Gehäuses (130), des besagten zweiten Gehäuses (140), des ersten Abdeckteils (150), und des zweiten Abdeckteils (160), mit isolierendem Öl gefüllt ist, und
das Kontaktfreie-Stromversorgung-Schwenkelement ferner eine Mehrzahl von Dichtungselementen aufweist, die an den jeweiligen Durchgangslöchern bereitgestellt sind, die an dem ersten Gehäuse (130) und dem zweiten Gehäuse (140) gebildet sind, und die konfiguriert sind, um den inneren Raum abzudichten.

2. Kontaktfreie-Stromversorgung-Schwenkelement gemäß Anspruch 1, wobei das besagte erste Gehäuse (130) und das erste Abdeckteil (150) mit der schwimmenden Struktur rotieren, wenn die schwimmende Struktur rotiert.

3. Kontaktfreie-Stromversorgung-Schwenkelement gemäß Anspruch 2, wobei das erste Gehäuse (130) einen unteren Endabschnitt und einen Seitenabschnitt der ersten Spuleneinheit (110) stützt.

4. Kontaktfreie-Stromversorgung-Schwenkelement gemäß Anspruch 2, ferner aufweisend eine Mehrzahl von Lagerabschnitten, die bereitgestellt sind zwischen dem ersten Gehäuse (130) und dem zweiten Gehäuse (140) und zwischen dem ersten Abdeckteil (150) und dem zweiten Abdeckteil (160).

5. Kontaktfreie-Stromversorgung-Schwenkelement gemäß Anspruch 2, wobei das erste Gehäuse (130) einen hohlen Abschnitt, wo die erste Spuleneinheit (110) aufgenommen ist, ein offenes oberes Ende, und eine Bodenfläche hat, die eine Öffnung an einem zentralen Abschnitt hat, und
das zweite Gehäuse (140) an der Öffnung bereitgestellt ist, die an der Bodenfläche des ersten Gehäuses (130) gebildet ist, und einen unteren Endabschnitt der zweiten Spuleneinheit (120) stützt.

6. Kontaktfreie-Stromversorgung-Schwenkelement gemäß Anspruch 5, wobei das erste Abdeckteil (150) ein scheibenförmiges Element ist, das eine Öffnung an einem zentralen Abschnitt hat und eine Form hat, die zu einer Form der Bodenfläche des ersten Gehäuses (130) korrespondiert, und
das zweite Abdeckteil (160) ein scheibenförmiges Element ist, das an der Öffnung des ersten Abdeckteils (150) bereitgestellt ist und eine Form hat, die zu einer Form des zweiten Gehäuses (140) korrespondiert.

7. Kontaktfreie-Stromversorgung-Schwenkelement gemäß Anspruch 1, wobei die erste Spuleneinheit (110) aufweist ein vertikales Element, eine erste Spule, die um das vertikale Element gewickelt ist, und einen oberen Endabschnitt und einen unteren Endabschnitt, die sich von beiden Enden des vertikalen Elements aus erstrecken in einer Richtung senkrecht zu dem vertikalen Element, und
die zweite Spuleneinheit (120) aufweist ein zylindrisches Element, eine zweite Spule (125), die um das zylindrische Element gewickelt ist, und ein oberes scheibenförmiges Element und ein unteres scheibenförmiges Element, die an beiden Enden des zylindrischen Elements bereitgestellt sind, wobei ein Durchmesser des oberen scheibenförmigen Elements und ein Durchmesser des unteren scheibenförmigen Elements größer sind als ein Querschnittsdurchmesser des zylindrischen Elements.

8. Kontaktfreie-Stromversorgung-Schwenkelement gemäß Anspruch 2, wobei das besagte erste Gehäuse (130) und die erste Spuleneinheit (110) zueinander im Abstand sind um einen vorbestimmten Abstand, und die erste Spuleneinheit (110, 111) an dem besagten ersten Gehäuse (130) fixiert ist mittels eines Isolators.

9. Kontaktfreie-Stromversorgung-Schwenkelement gemäß Anspruch 1, wobei zwei erste Spuleneinheiten (110, 111, 210, 211) zueinander im Abstand sind in einem rechten Winkel um die zweite Spuleneinheit (120, 220) herum, oder drei erste Spuleneinheiten (310, 311, 312) zueinander im Abstand sind in einem Winkel von 120° um die zweite Spuleneinheit (320) herum.

## Revendications

1. Joint articulé d'alimentation sans contact comprenant :
une première unité bobine (110, 111, 210, 211, 310, 311, 312), connectée à une structure flottante, pouvant tourner avec la structure flottante, à laquelle est appliqué un courant à partir d'une unité alimentation disposée au niveau de la structure flottante ;
une seconde unité bobine (120, 220, 320), connectée à un barillet tournant par rapport à la structure flottante, espacé de la première unité bobine, dans laquelle un courant est induit par un champ magnétique formé par la première unité bobine ;
une première enveloppe (130), qui présente un espace intérieur creux avec un dessus ouvert, laquelle enveloppe est formée en faisant tourner de 360° une section transversale en forme de L autour d'une partie centrale, configurée pour supporter la première unité bobine, connectée à la structure flottante, et présentant une ouverture au niveau d'une partie centrale de la surface inférieure de la partie cylindrique (130) ;
une seconde enveloppe (140), présentant la forme d'un disque, configurée pour supporter la seconde unité bobine, disposée au niveau de l'ouverture de la partie cylindrique (130), et connectée au barillet ;
une première partie couvercle (150), configurée pour couvrir la première unité bobine, et connectée à la structure flottante ; et
une seconde partie couvercle (160), configurée pour couvrir la seconde unité bobine,
où le courant induit dans la seconde unité bobine est fourni au barillet,
**caractérisé en ce que**
une pluralité de trous traversants (135) sont formés au niveau de ladite première enveloppe (130) afin de permettre aux extrémités respectives de la première bobine (115, 116) enroulée autour de la première unité bobine, d'être insérées dans le joint articulé d'alimentation sans contact (100), et de sortir de celui-ci,
une pluralité de trous traversants (145) sont formés au niveau de la seconde enveloppe (140) afin de permettre aux extrémités de la seconde bobine enroulée autour de la seconde unité bobine, d'être insérées dans le joint articulé d'alimentation sans contact (100), et de sortir de celui-ci,
l'espace intérieur défini par ladite première enveloppe (130), ladite seconde enveloppe (140), la première partie couvercle (150), et la seconde partie couvercle (160), est rempli d'huile isolante, et le joint articulé d'alimentation sans contact comprend en outre une pluralité d'éléments d'étanchéité, disposés au niveau des trous traversants respectifs formés au niveau de la première enveloppe (130) et de la seconde enveloppe (140), configurés pour sceller l'espace intérieur.

2. Joint articulé d'alimentation selon la revendication 1, où ladite première enveloppe (130) et la première partie couvercle (150) tournent avec la structure flottante lorsque la structure flottante tourne.

3. Joint articulé d'alimentation selon la revendication 2, où la première enveloppe (130) supporte une partie extrémité inférieure et une partie latérale de la première unité bobine (110).

4. Joint articulé d'alimentation selon la revendication 2, comprenant en outre une pluralité de parties roulements disposées entre la première enveloppe (130) et la seconde enveloppe (140), et entre la première partie couvercle (150) et la seconde partie couvercle (160).

5. Joint articulé d'alimentation selon la revendication 2, où la première enveloppe (130) présente une partie creuse où est reçue la première unité bobine (110), un dessus ouvert, et une surface inférieure présentant une ouverture au niveau d'une partie centrale, et la seconde enveloppe (140) est disposée au niveau de l'ouverture formée au niveau de la surface inférieure de la première enveloppe (130), et supporte une partie extrémité inférieure de la seconde unité bobine (120).

6. Joint articulé d'alimentation selon la revendication 5, où
la première partie couvercle (150) est un élément en forme de disque présentant une ouverture au niveau d'une partie centrale, et présente une forme correspondant à la forme de la surface inférieure de la première enveloppe (130), et
la seconde partie couvercle (160) est un élément en forme de disque disposé au niveau de l'ouverture de la première partie couvercle (150), et présente une forme correspondant à la forme de la seconde enveloppe (140).

7. Joint articulé d'alimentation selon la revendication 1, où
la première unité bobine (110) comprend un élément vertical, une première bobine enroulée autour de l'élément vertical, et une partie extrémité supérieure et une partie extrémité inférieure s'étendant à partir des deux extrémités de l'élément vertical dans une direction perpendiculaire à l'élément vertical, et
la seconde unité bobine (120) comprend un élément cylindrique, une seconde bobine (125) enroulée autour de l'élément cylindrique,
et un élément supérieur en forme de disque, et un élément inférieur en forme de disque, disposés aux deux extrémités de l'élément cylindrique, le diamètre de l'élément supérieur en forme de disque, et le diamètre de l'élément inférieur en forme de disque, étant supérieurs au diamètre en coupe transversale de l'élément cylindrique.

8. Joint articulé d'alimentation selon la revendication 2, où ladite première enveloppe (130) et la première unité bobine (110), sont espacées l'une de l'autre d'une distance prédéterminée, et la première unité bobine (110, 111) est fixée sur ladite première enveloppe (130) par l'intermédiaire d'un isolateur.

9. Joint articulé d'alimentation selon la revendication 1, où deux premières unités bobines (110, 111, 210, 211) sont espacées l'une de l'autre à angle droit autour de la seconde unité bobine (120, 220), ou trois premières unités bobines (310, 311, 312) sont espacées les unes des autres sous un angle de 120° autour de la seconde unité bobine (320).
